# EUROPÄISCHE PATENTSCHRIFT

(11) **EP 0 811 142 B1**
(45) Veröffentlichungstag und Bekanntmachung des Hinweises auf die Patenterteilung: **10.01.2001**
(21) Anmeldenummer: 96904816.4
(22) Anmeldetag: 19.02.1996
(51) Int. Cl.: F26B 23/00

(54) **VERFAHREN UND ANORDNUNG ZUM BETRIEB EINES MIT HEIZDAMPF BEAUFSCHLAGTEN TROCKNERS**
PROCESS AND ARRANGEMENT FOR OPERATING A DRYER FED BY HEATING STEAM
PROCEDE ET DISPOSITIF POUR FAIRE FONCTIONNER UN SECHOIR ALIMENTE PAR DE LA VAPEUR DE CHAUFFAGE

(30) Priorität: 20.02.1995 DE 19506900; 12.01.1996 DE 19601931
(43) Veröffentlichungstag der Anmeldung: 10.12.1997
(73) Patentinhaber: VEAG Vereinigte Energiewerke AG, D-12681 Berlin (DE)
(72) Erfinder: HÄUSLER, Andrea, D-13053 Berlin (DE); BAUER, Franz, D-45525 Hattingen (DE); HÖHNE, Hartmut, D-03099 Klein-Gaglow (DE)
(74) Vertreter: Zinken-Sommer, Rainer
(86) Internationale Anmeldenummer: EP9600683
(87) Internationale Veröffentlichungsnummer: WO9626404

(56) Entgegenhaltungen:
- AT-A- 389 466
- DE-A- 2 901 723

## Beschreibung

Die Erfindung betrifft ein Verfahren und eine Anordnung zum Betrieb eines mit Heizdampf beaufschlagten Kohletrockners in einer Kraftwerksanlage gemäß dem Oberbegrift des Patentanspruchs 1, beziehungsweise dem Oberbegrift des Patentanspruchs 2.

Ein derartiges Verfahren beziehungsweise Anordnung ist aus des DE-A- 29 01 723 bekannt.

Zur Kohletrocknung wird als Heizdampf der von einer Dampfturbine abgezweigte gekühlte Heißdampf in den im Kohletrockner angeordneten Wärmetauscher geleitet und dadurch die im Kohletrockner befindliche nasse Rohbraunkohle getrocknet (z. B. DE 29 01 723, 37 31 720, DD 141 344).
Der aus der nassen Kohle ausgetriebene Brüden wird als Brüdendampf einem Dampfumformer zugeführt. Diesem Dampfumformer wird ebenfalls das durch Trocknung der nassen Kohle mit dem Heißdampf entstehende Kondensat zugeführt. Während das Brüdenkondensat ausgeschleust wird, wird der erzeugte Sattdampf energetisch genutzt (z. B. DE 29 01 723).
Eine energetische Nutzung des Brüdendampfes wird auch dadurch erreicht, daß dieser durch Verdichtung überhitzt wird (DE 36 40 610).
Ebenso ist es möglich, den Brüdendampf zur Rezirkulation im Trockner zu verwenden (DE 41 15 781, DE 40 20 994).
Weiterhin ist bekannt, den Brüdendampf mittels einer gesonderten Feuerung zu überhitzen, einen Teil direkt zur Rezirkulation dem Trockner und den anderen Teil einer Turbine zuzuführen (DE 37 31 720, DD 141 344).
Es wurde jedoch festgestellt, daß mit den bisherigen Nutzungsmöglichkeiten des Brüdendampfes der Wirkungsgrad der Gesamtanlage noch nicht optimal ist.

Der Erfindung liegt daher die Aufgabe zugrunde, eine energetische Einbindung des Brüdendampfes in den Kraftwerksprozeß mit möglichst hohem Wirkungsgrad zu erreichen.

Dies wird dadurch erreicht, daß erfindungsgemäß der Sattdampf durch den Heißdampf überhitzt, dadurch der Heißdampf gekühlt und der überhitzte Dampf in das Niederdruckteil der Dampfturbine oder eine andere Dampfturbine geleitet wird.

Zur Realisierung ist erfindungsgemäß die Sattdampfleitung mit einem in die Heißdampfleitung eingebundenen Dampf-Dampf-Wärmetauscher und die Dampfleitung des Dampf-Dampf-Wärmetauschers mit dem Niederdruckteil der Dampfturbine oder mit einer anderen Dampfturbine verbunden.

Durch die Erfindung ist gewährleistet, daß der Heißdampf auf die für den Trockner geeignete Temperatur mit dem Sattdampf gekühlt und damit der Sattdampf für die energetische Nutzung überhitzt wird.

An einem Ausführungsbeispiel wird die Erfindung anhand einer Kohletrocknung näher erläutert. Die Zeichnung zeigt:
- Fig. 1:: Das Anlagenschema der Kohletrocknung innerhalb einer mit Braunkohle betriebenen Kohlekraftwerksanlage.
- Fig. 2:: Die Darstellung der Medienparameter bei der Kohletrocknung von 53 % auf 12 % Wassergehalt.

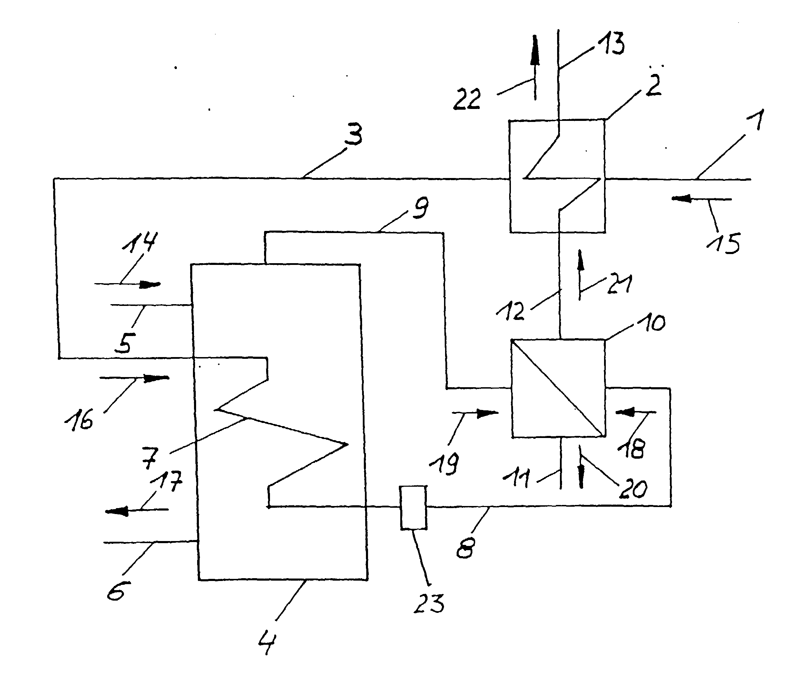

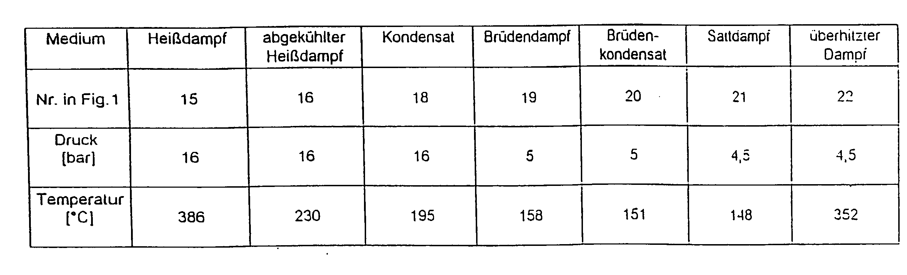

Der Kohletrockner 4 weist den Kohleeintrag 5 für die nasse Rohbraunkohle 14 und den Kohleaustrag 6 für die Trockenbraunkohle 17 auf (Fig. 1). Innerhalb des Kohletrockners 4 ist der Wärmetauscher 7 angeordnet und mit der Heißdampfleitung 3 verbunden. Die Kondensatleitung 8 des Wärmetauschers 7 ist über den Entspanner 23 mit dem Dampfumformer 10 verbunden. Die Brüdendampfleitung 9 des Kohletrockners 4 ist ebenfalls mit dem Dampfumformer 10 verbunden. Der Dampfumformer 10 weist die Brüdenkondensatleitung 11 und die Sattdampfleitung 12 auf, die mit dem Dampf-Dampf-Wärmetauscher 2 verbunden ist. Der Dampf-Dampf-Wärmetauscher 2 ist mit der von der Dampfturbine (nicht dargestellt) abgeführten Heißdampfleitung 1 verbunden. Die Dampfleitung 13 des Dampf-Dampf-Wärmetauschers 2 ist mit dem Niederdruckdampfteil (nicht dargestellt) einer Dampfturbine innerhalb der Kohlekraftwerksanlage verbunden.

### Die Wirkungsweise ist folgende:

Der Heißdampf 15 von der Dampfturbine gelangt über die Heißdampfleitung 1 in den Dampf-Dampf-Wärmetauscher 2 und wird durch den Sattdampf 21 abgekühlt. Der so für den Kohletrockner 4 abgekühlte Heißdampf 16 wird dem Wärmetauscher 7 im Kohletrockner 4 zugeführt. In den Kohletrockner 4 wird über den Kohleeintrag 5 die nasse Rohbraunkohle 14 gefördert und durch den abgekühlten Heißdampf 16 über den Wärmetauscher 7 getrocknet. Die Trockenbraunkohle 17 wird über den Kohleaustrag 6 abgefördert. Die durch den Trocknungsprozeß aus der nassen Rohbraunkohle ausgetriebene Feuchtigkeit ergibt den Brüdendampf 19, der über die Brüdendampfleitung 9 in den Dampfumformer 10 eingeleitet wird. Dabei wird der Kohletrockner 4 unter einem Druck von 5 bar betrieben (Fig. 2).

Das beim Trocknungsprozeß entstehende Kondensat 18 wird über die Kondensatleitung 8 in den Dampfumformer 10 geleitet. Dabei wird in dem Entspanner 23 der Druck des Kondensates 18 soweit reduziert, daß er unterhalb des Druckes des Brüdendampfes 19 liegt. Bei der Dampfumformung im Dampfumformer 10 wird der Sattdampf 21 und das Brüdenkondensat 20 erzeugt. Das Brüdenkondensat 20 wird zur Speisewassererwärmung innerhalb der Kraftwerksanlage genutzt. Der Sattdampf 21 wird über die Sattdampfleitung 12 in den Dampf-Dampf-Wärmetauscher 2 gefördert. Infolge der Abkühlung des Heißdampfes 1 im Dampf-Dampf-Wärmetauscher 2 wird der Sattdampf 12 überhitzt und so der überhitzte Dampf 22 erzeugt, der über die Dampfleitung 13 dem Niederdruckteil der Dampfturbine zugeführt wird.
Der so überhitzte Dampf 22 ermöglicht eine bessere energetische Nutzung und führt damit zu einem höheren Wirkungsgrad der Kraftwerksanlage.
Der überhitzte Dampf 22 ist auch in eine andere Dampfturbine mit ähnlichen Vorteilen einleitbar.

Die Erfindung ist für alle indirekt mit Dampf beheizte Trockner mit oder ohne Wirbelbett und mit oder ohne Rezirkulationsmedium anwendbar, z. B. zur Trocknung von Klärschlamm, Biomassen und Lebensmittel.

Die Erfindung ist insbesondere für die Trocknung von feuchten brennbaren Stoffen anwendbar.

Die Erfindung ist sowohl für atmosphärisch als auch für unter Druck betriebene Trockner anwendbar, wobei die letztere Betriebsweise günstiger ist.

### Aufstellung der verwendeten Bezugszeichen

- 1: Heißdampfleitung
- 2: Dampf-Dampf-Wärmetauscher
- 3: Heißdampfleitung
- 4: Kohletrockner
- 5: Kohlezufuhr
- 6: Kohleaustrag
- 7: Wärmetauscher
- 8: Kondensatleitung
- 9: Brüdendampfleitung
- 10: Dampfumformer
- 11: Brüdenkondensatleitung
- 12: Sattdampfleitung
- 13: Dampfleitung
- 14: Rohbraunkohle
- 15: Heißdampf
- 16: gekühlter Heißdampf
- 17: Trockenkohle
- 18: Kondensat
- 19: Brüdendampf
- 20: Brüdenkondensat
- 21: Sattdampf
- 22: überhitzter Dampf
- 23: Entspanner

## Patentansprüche

1. Verfahren zum Betrieb eines mit Heizdampf beaufschlagten Kohletrockners (4) in einer Kraftwerksanlage, wobei Heißdampf (15) von einer Dampfturbine als Heizdampf indirekt dem Trockner (4) zugeführt wird, das Kondensat (18) des Heißdampfes (15) mittels des Brüdendampfes (19) aus dem Trockner (4) zu Sattdampf (21) umgeformt und energetisch genutzt wird,
**gekennzeichnet dadurch,**
daß der Sattdampf (21) durch den Heißdampf (15) überhitzt, dadurch der Heißdampf (15) gekühlt und der überhitzte Dampf (22) in das Niederdruckteil der Dampfturbine oder in eine andere Dampfturbine geleitet wird.

2. Anordnung zum Betrieb eines mit Heizdampf beaufschlagten Kohletrockners (4) in einer Kraftwerksanlage, wobei eine Heißdampfleitung (1) von einer Dampfturbine in den Trockner (4) mit internem Wärmetauscher eingebunden ist, eine Brüdendampfleitung (9) und eine Kondensatleitung (8) des Trockners (4) mit einem Dampfumformer (10) verbunden sind und der Dampfumformer (10) eine Sattdampfleitung (12) und eine Brüdenkondensatleitung (11) aufweist,
**gekennzeichnet dadurch**,
daß die Sattdampfleitung (12) mit einem in die Heißdampfleitung (1) eingebundenen Dampf-Dampf-Wärmetauscher (2) und die Dampfleitung (13) des Dampf-Dampf-Wärmetauschers (2) mit dem Niederdruckteil der Dampfturbine oder einer anderen Dampfturbine verbunden ist.

## Claims

1. A process to operate a coal drier (4) to which heating steam is applied in a power plant, whereby the heating steam (15) is supplied by a steam turbine indirectly to the drier (4), the condensate (18) of the heating steam (15) is converted to saturated steam (21) by means of the exhaust vapors (19) from the drier (4), characterized in that the saturated steam (21) is overheated by the heating steam (15), the heating steam (15) is cooled, and the overheated steam (22) is guided into the low pressure part of the steam turbine or into another steam turbine.

2. An arrangement to operate a coal drier (4) to which heating steam is applied in a power plant, whereby a heating steam line (1) from a steam turbine is incorporated in the drier (4) with an internal heat exchanger, an exhaust steam line (9) and a condensate line (8) of the drier (4) are connected to a steam converter (10), and the steam converter (10) has a saturated steam line (12) and an exhaust vapor condensate line (11), characterized in that the saturated steam line (12) is connected to a steam/steam heat exchanger (2) incorporated in the heating line (1), and the steam line (13) of the steam/steam heat exchanger (2) is connected to the low pressure part of the steam turbine or another steam turbine.

## Revendications

1. Procédé d'exploitation d'un sécheur à charbon (4) alimenté en vapeur d'eau dans une centrale de force motrice, selon lequel de la vapeur chaude (15) est amenée indirectement au sécheur (4) sous forme de vapeur de chauffe, par une turbine à vapeur, et le condensat (18) de la vapeur chaude (15) est convertie en vapeur saturée (21) à l'aide de la buée (19) sortant du sécheur (4), et utilisée à des fins énergétiques, caractérisé en ce que la vapeur saturée (21) est surchauffée par la vapeur chaude (15), de ce fait la vapeur chaude (15) est refroidie et la vapeur surchauffée (22) est conduite dans la partie basse pression de la turbine à vapeur ou dans une autre turbine à vapeur.

2. Dispositif pour l'exploitation d'un sécheur à charbon (4) alimenté en vapeur d'eau dans une centrale de force motrice, dans lequel une canalisation de vapeur chaude (1) en provenance d'une turbine à vapeur est intégrée dans le sécheur (4) avec échangeur de chaleur interne, une canalisation de buée (9) et une canalisation de condensat (8) du sécheur (4) sont reliées à un transformateur de vapeur (10) et le transformateur de vapeur (10) présente une canalisation de vapeur saturée (12) et une canalisation de condensat de buée (11), caractérisé en ce que la canalisation de vapeur saturée (12) est reliée à un échangeur de chaleur vapeur-vapeur (2) intégré dans la canalisation de vapeur chaude (1) et la canalisation de vapeur (13) de l'échangeur de chaleur vapeur-vapeur (2) est reliée à la partie basse pression de la turbine à vapeur ou à une autre turbine à vapeur.
